# EUROPEAN PATENT SPECIFICATION

(11) **EP 2 151 317 B1**
(45) Date of publication and mention of the grant of the patent: **06.08.2014**
(21) Application number: 09166094.4
(22) Date of filing: 22.07.2009
(51) Int. Cl.: B32B 5/02, B32B 5/06, D04H 1/46, E04C 2/24

(54) **Waterproof membrane, particularly for insulating buildings subjected to hydrostatic pressure.**
Wassersperrende Membran, insbesondere zur Isolierung von Gebäuden, die hydrostatischem Druck ausgesetzt sind.
Membrane étanche, en particulier pour l'isolation de Bâtiments soumis à une pression hydrostatique.

(30) Priority: 05.08.2008 IT TV20080104
(43) Date of publication of application: 10.02.2010
(73) Proprietor: Volteco S.p.A., 31050 Ponzano Veneto TV (IT)
(72) Inventor: Guderzo, Marco, 31100 Treviso (IT)
(74) Representative: Modiano, Micaela Nadia

(56) References cited:
- EP-A1- 0 945 555
- EP-A2- 0 278 419
- GB-A- 2 286 004
- US-A- 2 429 486

## Description

The present invention relates to a waterproof membrane, particularly for insulating buildings subjected to hydrostatic pressure.

Membranes of various kinds, adapted to insulate in theory the walls of a building in order to avoid water infiltrations, are known in the building sector.

An example of these membranes of the known type is disclosed in EP0278419.

The above cited patent discloses a waterproof membrane composed of a layer of swellable clay, preferably bentonite, interposed between a layer of supporting textile material and a covering layer, preferably constituted by textile material.

All three layers are mutually assembled mechanically by needling.

This known type of membrane provides a sealing element that is waterproof and in which both the supporting layer and the covering layer remain connected in a fixed manner during and after the swelling of the layer of clay, so as to ensure a more compact seal of the swelled particles of clay.

This known type of membrane, used mainly to seal soils and landfills, is not free from drawbacks, which include the fact that in case of reinforced concrete structures the textile layer in contact with the concrete is unlikely to be saturated by the swelling material, allowing potential infiltrations of water that can occur between the concrete and the textile layer.

This drawback is observed in particular in the overlap regions between two contiguous membranes, thus making the membrane totally ineffective.

GB 2 286 004 A discloses a geocomposite clay layer having a first fibrous layer, a second fibrous layer, and a non-fibrous layer encapsulated between the first and second fibrous layers. The non-fibrous layer is made up of contaminant resistant sodium bentonite which is retained between the first and second fibrous layers. A plurality of fibres extend from the second fibrous layer, through the non-fibrous layer, and such that ends of the fibres extend outwardly of an outer surface of the first fibrous layer. Such ends of the extending fibres are heat fused so as to be secured to the first fibrous layer, outwardly of the outer surface of the first fibrous layer, for providing resistance to shear forces applied to the geocomposite clay layer, to that the bentonite layer will be retained between the first and second fibrous layers.

The aim of the present invention is to eliminate the above-mentioned drawback, by providing a waterproof membrane in which the water-expandable layer is in direct contact with the concrete of the building to be insulated and is mechanically gripped thereto in the same manner so as to compact the membrane against the concrete, preventing the passage of water even in case of microcracks of the concrete.

Within this aim, an object of the present invention is to provide a waterproof membrane that is highly reliable, relatively simple to provide and at competitive costs.

In accordance with the invention, there is provided a waterproof membrane, particularly for insulating buildings subjected to hydrostatic pressure, as defined in the appended claims.

Further characteristics and advantages of the present invention will become better apparent from the following detailed description of a preferred but not exclusive embodiment of a waterproof membrane, particularly for insulating buildings subjected to hydrostatic pressure, according to the invention, illustrated by way of non-limiting example in the accompanying drawings, wherein:

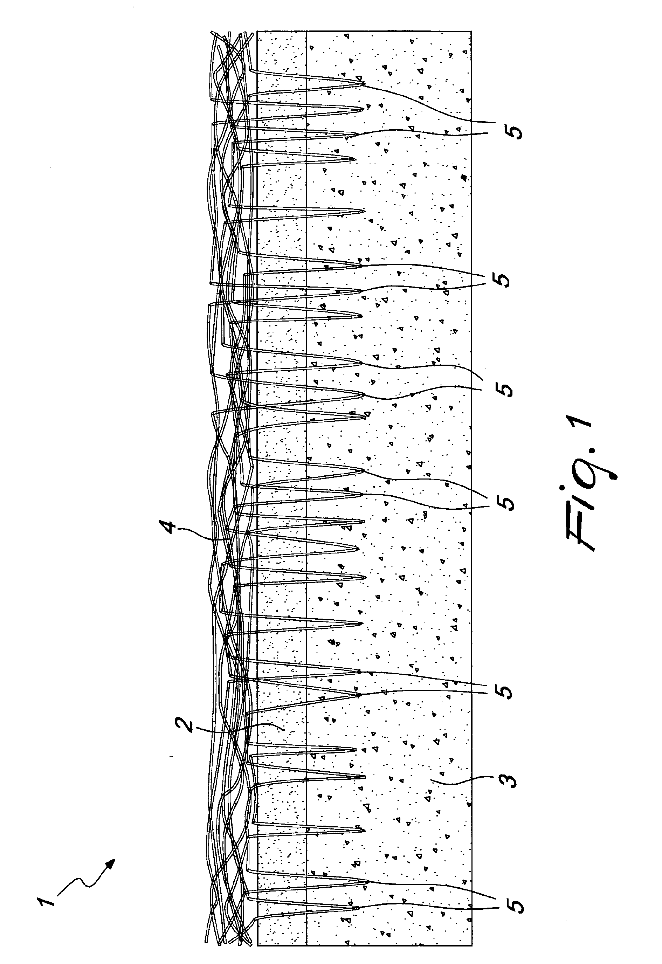

Figure 1 is a sectional side elevation view of an embodiment of a waterproof membrane, particularly for insulating buildings subjected to hydrostatic pressure, according to the present invention, installed on a wall to be insulated of a building;

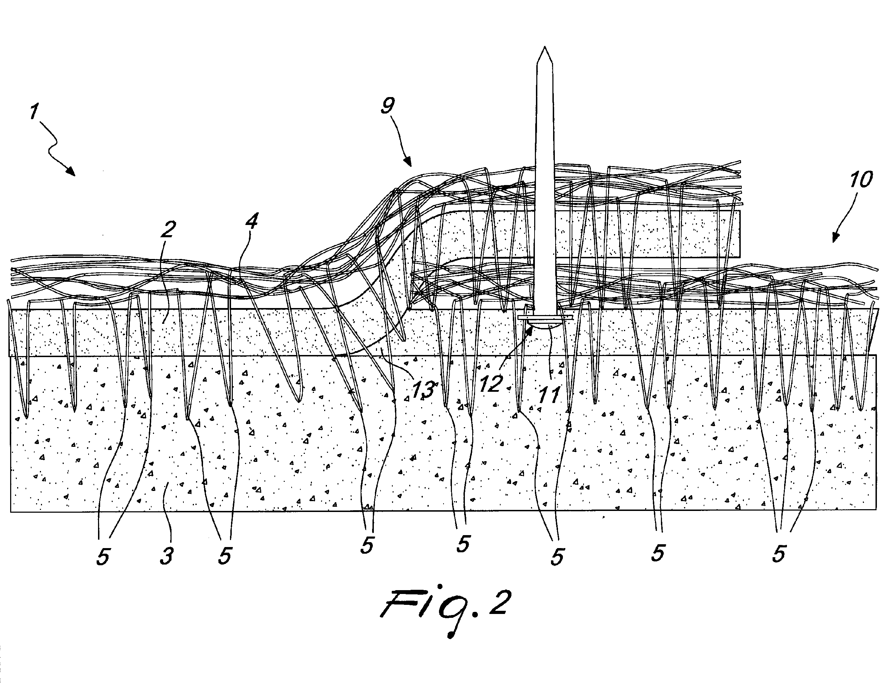

Figure 2 is a sectional side elevation view of the membrane shown in Figure 1 in a region where it overlaps another waterproof membrane according to the present invention;

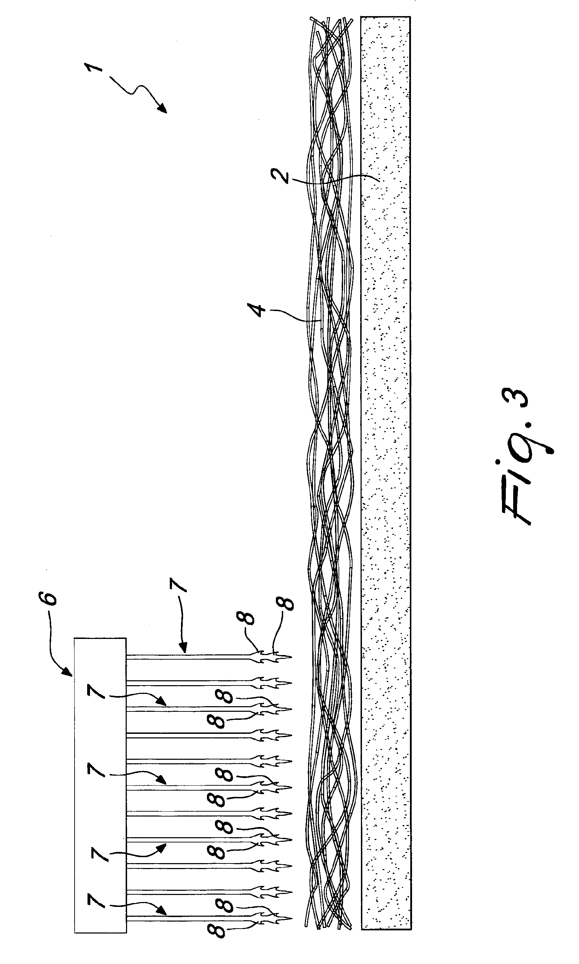

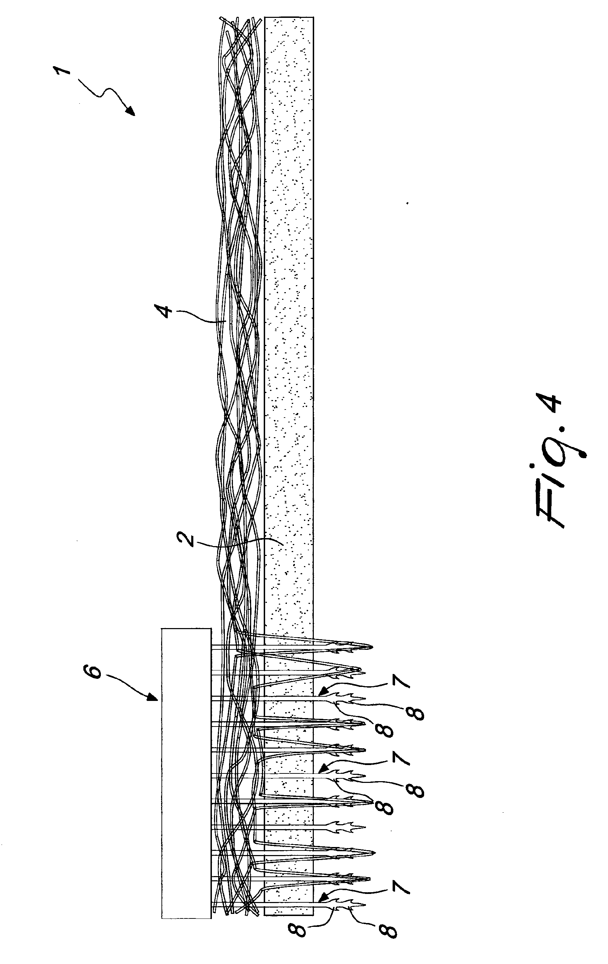

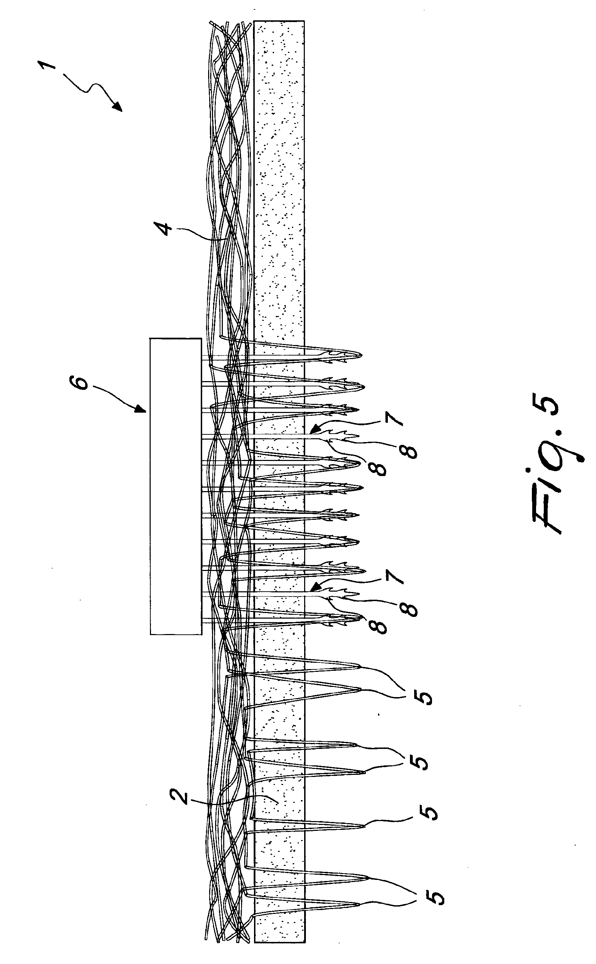

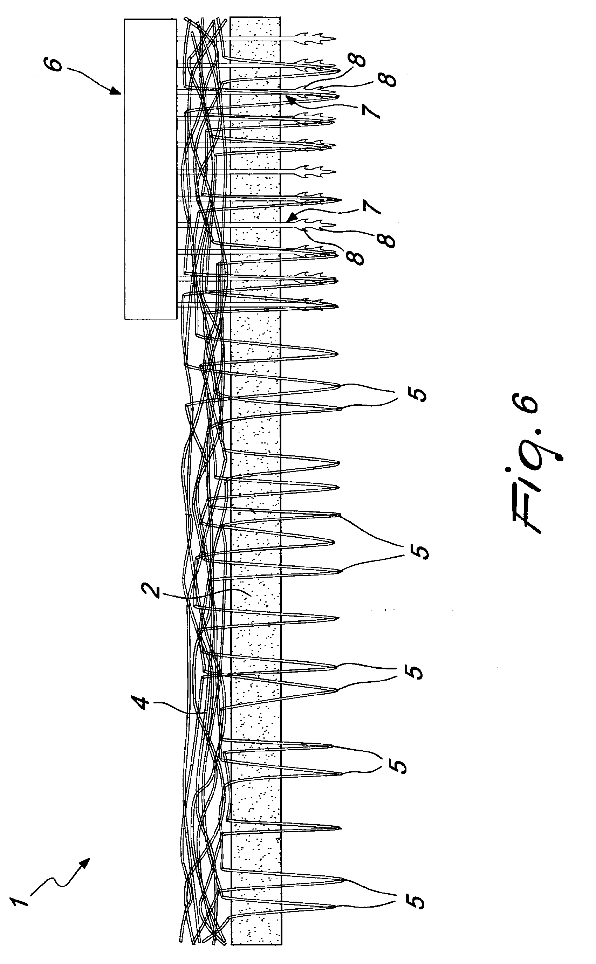

Figures 3 to 6 are sectional side elevation views of the operating steps of the fixing between the first layer and the second layer of the membrane shown in Figure 1;

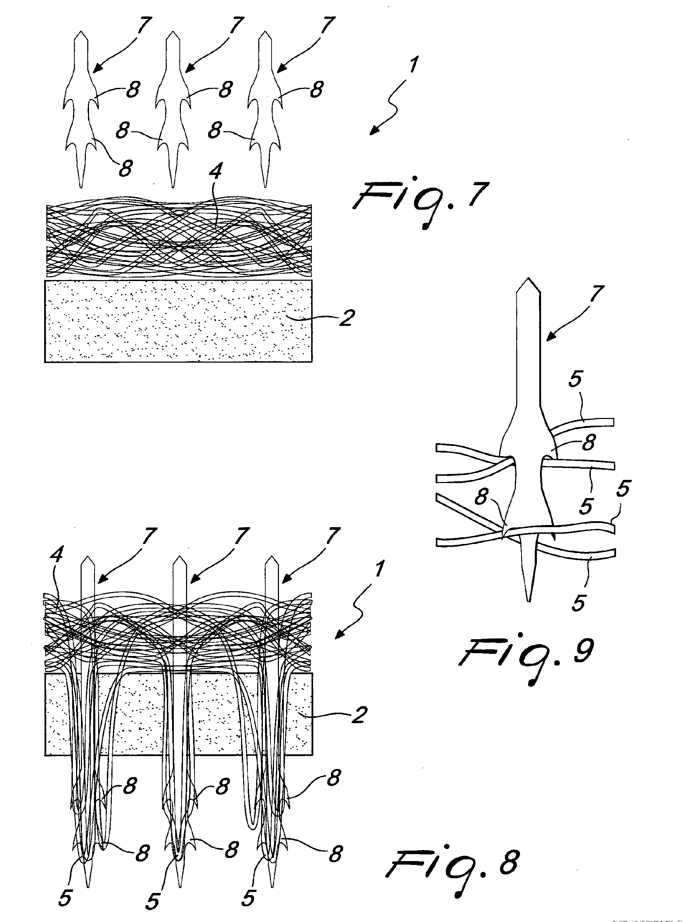

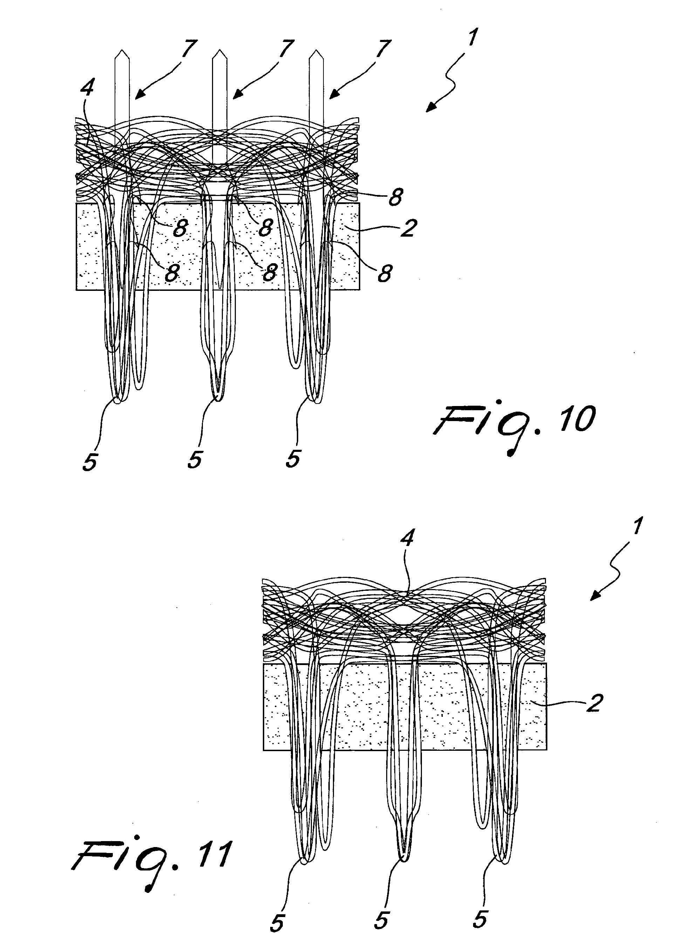

Figures 7 to 11 are sectional side elevation detail views of the passage of the filaments of the second layer through the first layer of the membrane shown in Figure 1.

With reference to the figures, a waterproof membrane particularly for insulating buildings subjected to hydrostatic pressure, generally designated by the reference numeral 1, comprises a first layer 2 of water-expandable waterproof material that is adapted to cover the outer surface of at least one wall 3 to be insulated of a building, which can consist for example of a concrete wall, and a second layer 4 of fibrous material that covers the first layer 2 on the opposite side with respect to the wall 3 to be insulated.

More precisely, the water-expandable waterproof material of the first layer 2 is a rubber material that is capable of reacting upon contact with water by swelling, such as for example a compound of polymers of the thermoplastic type.

In order to increase the water-expanding function of the first layer 2, additives of polymeric origin can be added to the polymeric compound.

This mixture, differently from clays, is in itself already a physical barrier, and depending on the mixed percentages the mixed additives allow a swelling of the first layer 2 comprised between 100% and 600% of the initial volume.

Generally, for correct insulation of the wall 3, a thickness of the first layer 2 comprised between 0.5 mm and 10.00 mm is sufficient.

The fibrous material of the second layer 4 is instead a synthetic nonwoven material with high mechanical and chemical characteristics, such as for example a material made of polymeric fibers.

As a material made of polymeric fibers it is possible for example to choose materials made of polypropylene fibers, polyethylene fibers, polyacryl fibers, polyamide fibers or having similar characteristics.

According to the invention, there is a plurality of filaments 5 of the second layer 4 that pass from side to side through the first layer 2 and can be embedded in the wall 3 to be insulated for the mechanical grip of the first layer 2 to the wall 3.

More precisely, the first layer 2 and the second layer 4 are assembled mechanically by means of a loom 6 with needles 7, which is designed to drive the filaments 5 of the second layer 4 through the first layer 2, leaving them protruding on the surface for interface with the wall 3 to be insulated.

The needles 7, in terms of shape and distribution density, are studied to avoid damaging the first layer 2 and the second layer 4.

In fact, proximate to the tip, each needle 7 has a plurality of hook-like elements 8, which are adapted to hook the individual filaments 5 and drag them through the first layer 2 until they protrude from the other side.

After dragging the filaments 5, the loom 6 is made to move backward so as to extract the needles 7 from the two layers 2 and 4 without ruining them; this is possible because the hook-like elements 8 have a profile that is well radiused in the extraction direction.

After needling all of the second layer 4 onto the first layer 2, it is possible to proceed with the laying of the membrane 1, which consists in depositing such membrane on the wall 3.

With this needling process, performed on all of the extension of the membrane 1, the two layers 2 and 4 are firmly joined together, giving in any case the membrane 1 an excellent flexibility that allows it to adapt easily to any wall 3, regardless of its shape, without breaking the membrane 1.

Further, the grip of the membrane 1 on the wall 3 is allowed by means of the filaments 5 that are embedded in the concrete casting and by means of the internal swelling pressure of the membrane 1 upon contact with water, which expands the first layer 2, making it adhere perfectly to the wall 3, preventing the interface flow of water.

The swelling of the first layer 2 further allows the sealing of the holes formed by the needling process.

Installation of the membrane 1, which is provided in rolls of large size, occurs simply by resting it on the surface of interest with the side of the first layer 2 directed toward the subsequent concrete casting, taking care to overlap the joints of the sheets for approximately 100 mm.

It is in fact possible to provide overlap regions 9 of the first layer 2 with a second contiguous membrane 10.

In the overlap region 9, the filaments 5 that exit from the first layer 2 are engaged mechanically with the second layer 4 of the second membrane 10.

Further, in order to avoid the separation of the two overlapping flaps, there can be pins 11 provided with washers 12 that are inserted at the overlap region 9.

In order to occupy all free spaces, thus preventing any water infiltrations, the first layer 2 of the membrane 10 that is surmounted can extend with a portion 13 that is additional with respect to the corresponding second layer 4, so as to penetrate more easily below the curved part of the overlap region 9.

From the operational standpoint, the pins 11 are used in a first step of the laying in order to achieve the interconnection of the first and second layers, in the region of the corresponding overlap, to an appropriately provided support (not shown), which is constituted for example by a poor concrete slab.

Subsequently, reinforced concrete casting is performed and then hydration is performed, with consequent sealing by expansion.

In practice it has been found that the waterproof membrane, particularly for insulating buildings subjected to hydrostatic pressure, according to the present invention fully achieves the intended aim and objects, since it allows to provide the hydraulic seal between overlaps of the applied sheets, avoiding interface migration between the concrete wall and the membrane itself.

Another advantage of the waterproof membrane according to the present invention is that it does not require welds or taping or even the addition of sealing and/or water-expandable external materials to join the various applied sheets.

A further advantage of the waterproof membrane according to the present invention is that it meets the requirements of simplicity of installation that are needed in building yards.

The waterproof membrane, particularly for insulating buildings subjected to hydrostatic pressure, thus conceived is susceptible of numerous modifications and variations, all of which are within the scope of the appended claims.

In practice, the materials employed, so long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A waterproof membrane (1), particularly for insulating buildings subjected to hydrostatic pressure, comprising:
a first layer (2) of water-expandable waterproof rubber material that is capable of reacting upon contact with water by swelling and that is adapted to cover the outer surface of at least one wall (3) to be insulated of a building;
a second layer (4) of fibrous material that covers said first layer (2) on the opposite side with respect to said wall (3) to be insulated; and
a plurality of filaments (5) of said second layer (4) that pass through said first layer (2) from side to side and can be embedded in said wall (3) to be insulated for the mechanical grip of said fist layer (2) on said wall (3) to be insulated.

2. The membrane according to claim 1, **characterized in that** said rubber material is a compound of thermoplastic polymers.

3. The membrane according to one or more of the preceding claims, **characterized in that** it comprises polymeric additives that are mixed with said rubber material to provide a water-expandable function to said first layer (2) with a swelling comprised between 100% and 600% of the initial volume of said first layer (2).

4. The membrane according to claim 1, **characterized in that** said first layer (2) has a thickness comprised between 0.5 mm and 10.00 mm.

5. The membrane according to claim 1, **characterized in that** said fibrous material is a synthetic nonwoven material.

6. The membrane according to claim 5, **characterized in that** said synthetic material is a material of polymeric fibers selected among polypropylene fibers, polyethylene fibers, polyacrylic fibers, polyamide fibers.

7. The membrane according to claim 1, **characterized in that** it comprises at least one overlap region (9) of said first layer (2) with a second contiguous membrane (10), said filaments (5) that exit from said first layer (2) being engaged mechanically to the second layer (4) of said second membrane (10), said overlap region (9) having an extension of approximately 100 mm.

8. The membrane according to claim 7, **characterized in that** it comprises pins (11) provided with washers (12) for fixing said overlap region (9) to said second membrane (10).

9. The membrane according to claims 1 and 2, **characterized in that** said rubber material is constituted by a polyurethane and/or a thermoplastic polymer of the type known by the acronyms SBS, SEBS, TPU.

10. The membrane according to claims 1 and 2, **characterized in that** said rubber material is constituted by a material known by the acronym EPDM.

11. A waterproof membrane (1) installed on a wall (3) of a building to be insulated and subjected to hydrostatic pressure, the waterproof membrane (1) comprising:
a first layer (2) of water-expandable waterproof material covering the outer surface of said wall (3) and being in direct contact with said wall (3);
a second layer (4) of fibrous material that covers said first layer (2) on the opposite side with respect to said wall (3); and
a plurality of filaments (5) of said second layer (4) that pass through said first layer (2) from side to side and are embedded in said wall (3) for the mechanical grip of said first layer (2) on said wall (3).

12. The waterproof membrane (2) installed on the wall (3) of claim 11, wherein said first layer (2) is made of water-expandable waterproof rubber material.

## Patentansprüche

1. Wasserdichte Membran (1), insbesondere zum Isolieren von Gebäuden, die einem hydrostatischen Druck ausgesetzt sind, wobei die Membran folgendes umfasst:
eine erste Schicht (2) aus durch Wasser expandierbarem wasserdichten Gummimaterial, das in der Lage ist, auf den Kontakt mit Wasser durch Quellung zu reagieren und das eingerichtet ist, die äußere Oberfläche wenigstens einer Wand (3) des Gebäudes zu überdecken, die zu isolieren ist,
eine zweite Schicht (4) aus einem faserförmigen Material, die die erste Schicht (2) auf der der zu isolierenden Wand (3) gegenüberliegenden Seite überdeckt, und
eine Mehrzahl von Fäden (5) der zweiten Schicht (4), die durch die erste Schicht (2) von einer Seite zur anderen Seite verlaufen und in der zu isolierenden Wand (3) für den mechanischen Halt der ersten Schicht (2) an der zu isolierenden Wand (3) eingebettet werden können.

2. Membran nach Anspruch 1, **dadurch gekennzeichnet, dass** das Gummimaterial eine Mischung thermoplastischer Polymere ist.

3. Membran nach einem oder mehreren der vorstehenden Ansprüche, **dadurch gekennzeichnet, dass** sie Polymerzusätze enthält, die mit dem Gummimaterial vermischt sind um die Funktion der Expandierbarkeit durch Wasser für die erste Schicht (2) zu erreichen, wobei die Quellung zwischen 100% und 600% des ursprünglichen Volumens der ersten Schicht (2) liegt.

4. Membran nach Anspruch 1, **dadurch gekennzeichnet, dass** die erste Schicht (2) eine Dicke zwischen 0,5 mm und 10,00 mm aufweist.

5. Membran nach Anspruch 1, **dadurch gekennzeichnet, dass** das faserförmige Material ein synthetisches Vliesmaterial ist.

6. Membran nach Anspruch 5, **dadurch gekennzeichnet, dass** das synthetische Material ein Material aus Polymerfasern ist, die aus Polypropylenfasern, Polyethylenfasern, Polyacrylfasern und Polyamidfasern gewählt werden.

7. Membran nach Anspruch 1, **dadurch gekennzeichnet, dass** sie wenigstens einen Überlappungsbereich (9) der ersten Schicht (2) mit einer zweiten daran anschließenden Membran (10) aufweist, wobei die Fäden (5), die die erste Schicht (2) verlassen, mechanisch in die zweite Schicht (4) der zweiten Membran (10) eingreifen, wobei der Überlappungsbereich (9) eine Ausdehnung von etwa 100 mm aufweist.

8. Membran nach Anspruch 7, **dadurch gekennzeichnet, dass** sie Pins (11), die mit Unterlegscheiben (12) versehen sind, zum Befestigen des Überlappungsbereiches (9) an der zweiten Membran (10) aufweist.

9. Membran nach Anspruch 1 und 2, **dadurch gekennzeichnet, dass** das Gummimaterial durch ein Polyurethan und/oder ein thermoplastisches Polymer gebildet wird, dessen Typ durch die Abkürzungen SBS, SEBS, TPU bekannt ist.

10. Membran nach Anspruch 1 und 2, **dadurch gekennzeichnet, dass** das Gummimaterial aus einem Material gebildet wird, das durch die Abkürzung EPDM bekannt ist.

11. Wasserdichte Membran (1), die an einer zu isolierenden Wand (3) eines Gebäudes angeordnet ist, die einem hydrostatischem Druck ausgesetzt ist, wobei die wasserdichte Membran (1) folgendes umfasst:
eine erste Schicht (2) aus einem durch Wasser expandierenden wasserdichten Material, die die äußere Oberfläche der Wand (3) überdeckt und in direktem Kontakt mit der Wand (3) ist,
eine zweite Schicht (4) aus einem faserförmigen Material, die die erste Schicht (2) auf der relativ zu der Wand (3) gegenüberliegenden Seite überdeckt, und
eine Mehrzahl von Fäden (5) der zweiten Schicht (4), die durch die erste Schicht (2) von einer Seite zur anderen Seite verlaufen und in der Wand (3) für den mechanischen Halt der ersten Schicht (2) an der Wand (3) eingebettet sind.

12. Wasserdichte Membran (2), die an der Wand (3) befestigt ist, nach Anspruch (11), wobei die erste Schicht (2) aus einem durch Wasser ex-pandierbaren wasserdichten Gummimaterial gemacht ist.

## Revendications

1. Membrane étanche à l'eau (1), particulièrement pour isoler des bâtiments soumis à une pression hydrostatique, comprenant :
une première couche (2) de matériau caoutchouteux étanche à l'eau et expansible à l'eau qui est capable de réagir lors d'un contact avec de l'eau en gonflant et qui est conçue pour recouvrir la surface extérieure d'au moins une paroi (3) à isoler d'un bâtiment ;
une deuxième couche (4) de matériau fibreux qui recouvre ladite première couche (2) du côté opposé par rapport à ladite paroi (3) à isoler ; et
une multitude de filaments (5) de ladite deuxième couche (4) qui passent à travers ladite première couche (2) d'un côté jusqu'à l'autre et qui peuvent être intégrés dans ladite paroi (3) à isoler pour l'adhérence mécanique de ladite première couche (2) sur ladite paroi (3) à isoler.

2. Membrane selon la revendication 1, **caractérisée en ce que** ledit matériau caoutchouteux est un composé de polymères thermoplastiques.

3. Membrane selon une ou plusieurs des revendications précédentes, **caractérisée en ce qu'**elle comprend des additifs polymériques qui sont mélangés avec ledit matériau caoutchouteux pour fournir une fonction d'expansion à l'eau à ladite première couche (2) avec un gonflement compris entre 100 % et 600 % du volume initial de ladite première couche (2).

4. Membrane selon la revendication 1, **caractérisée en ce que** ladite première couche (2) a une épaisseur comprise entre 0,5 mm et 10,00 mm.

5. Membrane selon la revendication 1, **caractérisée en ce que** ledit matériau fibreux est un matériau synthétique non tissé.

6. Membrane selon la revendication 5, **caractérisée en ce que** ledit matériau synthétique est un matériau de fibres polymériques sélectionnées parmi des fibres de polypropylène, des fibres de polyéthylène, des fibres polyacryliques, des fibres de polyamide.

7. Membrane selon la revendication 1, **caractérisée en ce qu'**elle comprend au moins une région de superposition (9) de ladite première couche (2) avec une deuxième membrane (10) contiguë, lesdits filaments (5) qui sortent de ladite première couche (2) étant en prise mécaniquement avec la deuxième couche (4) de ladite deuxième membrane (10), ladite région de superposition (9) ayant une étendue d'environ 100 mm.

8. Membrane selon la revendication 7, **caractérisée en ce qu'**elle comprend des broches (11) pourvues de rondelles (12) pour fixer ladite région de superposition (9) à ladite deuxième membrane (10).

9. Membrane selon les revendications 1 et 2, **caractérisée en ce que** ledit matériau caoutchouteux est constitué d'un polyuréthane et/ou d'un polymère thermoplastique du type connu par les acronymes SBS, SEBS, TPU.

10. Membrane selon les revendications 1 et 2, **caractérisée en ce que** ledit matériau caoutchouteux est constitué d'un matériau connu par l'acronyme EPDM.

11. Membrane étanche à l'eau (1) installée sur une paroi (3) d'un bâtiment à isoler et soumise à une pression hydrostatique, la membrane étanche à l'eau (1) comprenant :
une première couche (2) d'un matériau étanche à l'eau et expansible à l'eau recouvrant la surface extérieure de ladite paroi (3) et étant en contact direct avec ladite paroi (3) ;
une deuxième couche (4) de matériau fibreux qui recouvre ladite première couche (2) du côté opposé par rapport à ladite paroi (3) ; et
une multitude de filaments (5) de ladite deuxième couche (4) qui passent à travers ladite première couche (2) d'un côté jusqu'à l'autre et qui sont intégrés dans ladite paroi (3) pour l'adhérence mécanique de ladite première couche (2) sur ladite paroi (3).

12. Membrane étanche à l'eau (2) installée sur la paroi (3) selon la revendication 11, dans laquelle ladite première couche (2) est réalisée en un matériau caoutchouteux étanche à l'eau et expansible à l'eau.
